# FASCICULE DE BREVET EUROPEEN

(11) **EP 1 622 788 B1**
(45) Date de publication et mention de la délivrance du brevet: **10.12.2008**
(21) Numéro de dépôt: 04730272.4
(22) Date de dépôt: 29.04.2004
(51) Int. Cl.: B60K 15/04

(54) **TUBULURE DE REMPLISSAGE A LAQUELLE EST ASSOCIEE UN RESERVOIR A ADDITIF POUR SYSTEME A CARBURANT ET PROCEDE POUR LA FABRICATION D'UN TEL ENSEMBLE**
EINFÜLLLEITUNG WELCHER EIN ZUSATZSTOFFTANK ZUGEORDNET IST FÜR EIN KRAFTSTOFFSYSTEM UND VERFAHREN ZUR HERSTELLUNG DIESER EINHEIT
FILLER PIPE INCLUDING AN ADDITIVE TANK FOR FUEL SYSTEM AND PRODUCTION METHOD FOR THE UNIT

(30) Priorité: 30.04.2003 FR 0305436; 07.11.2003 FR 0313073
(43) Date de publication de la demande: 08.02.2006
(73) Titulaire: Inergy Automotive Systems Research (SA), 1120 Bruxelles (BE)
(72) Inventeur: CAMPENON, Thierry, F-53000 Laval (FR); KUNSTMANN, Olivier, F-53210 Argentre (FR)
(74) Mandataire: Jacques, Philippe
(86) Numéro de dépôt international: PCT/EP2004/050654
(87) Numéro de publication internationale: WO 2004/096595

(56) Documents cités:
- DE-A- 10 000 396
- FR-A- 2 699 464
- US-B1- 6 263 924

## Description

La présente invention concerne un réservoir à additif pour système à carburant.

La volonté d'accroître la protection de l'environnement a conduit les autorités nationales et internationales de nombreuses régions du monde à renforcer les contraintes normatives dans de multiples domaines, en particulier dans le domaine du transport automobile. Dans le cas de véhicules mus par un moteur à combustion interne consommant du gasoil, les normes récentes limitent fortement la quantité admissible de particules solides émises dans l'atmosphère. Les constructeurs automobiles de véhicules à moteur à allumage spontané ont apporté une solution à ce problème en équipant ces véhicules de filtres à particules disposés dans la canalisation d'échappement des gaz de combustion vers l'atmosphère. Afin de régénérer le pouvoir filtrant de ces filtres à particules, il est nécessaire d'opérer à intervalles réguliers une combustion des particules colmatant partiellement les filtres.

Afin de pouvoir automatiser le cycle périodique de régénération des filtres à particules, il a été nécessaire de trouver un moyen pour abaisser la température de combustion de ces particules pour qu'elle soit compatible avec les températures les plus élevées qui puissent être obtenues dans les gaz d'échappement moyennant un réglage adéquat et temporaire des paramètres de combustion du moteur lui-même. L'utilisation d'une certaine quantité d'additif chimique de combustion a été reconnue nécessaire pour que l'abaissement de la température de combustion des particules solides puisse s'effectuer dans les gaz d'échappement à un niveau de température qui soit compatible avec la combustion du moteur et l'élimination totale des particules.

Des réservoirs à additif liquide, de petit volume comparé au réservoir à carburant, ont été conçus pour être montés sur ou à proximité du réservoir à carburant des véhicules à moteur Diesel. De pareils réservoirs à additifs nécessitent la mise en place d'une interface appropriée complexe pour la communication avec le réservoir à carburant. Cette interface ne respecte souvent qu'avec difficultés les exigences de tenue aux vibrations, à l'écrasement et au feu requises par les diverses législations en vigueur.

Par ailleurs, la quantité maximum d'additif liquide contenue dans le réservoir à additif ne permet généralement pas d'assurer les besoins de la catalyse de combustion des particules émises durant la totalité de la vie d'un véhicule. Plusieurs remplissages du réservoir à additif sont donc généralement nécessaires et sont habituellement réalisés lors d'un entretien du véhicule par un mécanicien professionnel. Ces remplissages posent souvent les problèmes supplémentaires de propreté et d'ergonomie de l'opération ainsi que de fiabilité du volume d'additif rechargé dans le réservoir.

Une tubulure de remplissage incluant les caractéristiques du préambule de la revendication indépendante 1 est connue du document US-B1- 6 263 924.

L'invention a pour but de fournir un réservoir à additif pour système à carburant qui réduise ou supprime les problèmes liés aux architectures de rèservoir à additif actuelles, notamment les problèmes d'ergonomie, de propreté et de fiabilité du remplissage.

A cet effet l'invention concerne une tubulure de remplissage d'un réservoir principal à carburant à laquelle est associé un réservoir à additif pour système à carburant comprenant une enceinte fermée en matière plastique.

Par réservoir à additif, on entend désigner un réservoir capable de stocker et de distribuer un additif liquide pour carburant dans un système fixe ou embarqué, en particulier dans un véhicule automobile. Par automobile, on désigne aussi bien les voitures que les camions et les motocyclettes.

L'additif contenu dans le réservoir est une composition, en solution dans un solvant hydrocarboné, d'un catalyseur de combustion à basse température de particules solides carbonées produites par la combustion incomplète d'un hydrocarbure lourd dans un moteur à allumage spontané. Par hydrocarbure lourd, on entend un carburant liquide ou pâteux à température ordinaire dont les molécules comprennent plus de 9 atomes de carbone. Un exemple d'un tel hydrocarbure lourd est une coupe pétrolière appelée gasoil, utilisable dans les moteurs de type Diesel.

Des exemples d'additifs liquides qui conviennent sont les sels de fer et de cérium en solution hydrocarbonée.

Selon l'invention, le réservoir à additif est destiné à un système à carburant, c'est-à-dire tout dispositif incorporé à un véhicule ou à une installation fixe dont la fonction principale est de stocker, de purifier, de mesurer ou de transporter un carburant destiné à l'alimentation d'un moteur thermique. II comprend au moins un réservoir à carburant et une canalisation d'alimentation du moteur en carburant.

Selon l'invention, le réservoir à additif est une enceinte fermée. Par enceinte fermée on entend un corps creux, de formes diverses, généralement étanche vis-à-vis de l'extérieur qui peut être équipée de divers accessoires internes ou externes ou encore traversant la paroi de l'enceinte, tels que des clapets, pipettes, séparateurs liquide-vapeur et capacités de dégazage.

Selon l'invention, le réservoir à additif est en matière plastique. Par matière plastique, on entend désigner toute matière comprenant au moins un polymère en résine de synthèse.

Tous les types de matière plastique peuvent convenir. Des matières plastiques convenant bien appartiennent à la catégorie des matières thermoplastiques.

Par matière thermoplastique, on désigne tout polymère thermoplastique, y compris les élastomères thermoplastiques, ainsi que leurs mélanges. On désigne par le terme "polymère" aussi bien les homopolymères que les copolymères (binaires ou ternaires notamment). Des exemples de tels copolymères sont, de manière non limitative : les copolymères à distribution aléatoire, les copolymères séquencés, les copolymères à blocs et les copolymères greffés.

Tout type de polymère ou de copolymère thermoplastique dont la température de fusion est inférieure à la température de décomposition conviennent Les matières thermoplastiques de synthèse qui présentent une plage de fusion étalée sur au moins 10 degrés Celsius conviennent particulièrement bien. Comme exemple de telles matières, on trouve celles qui présentent une polydispersion de leur masse moléculaire.

En particulier, on peut utiliser des polyoléfines, des polyhalogénures de vinyle, des polyesters thermoplastiques, des polycétones, des polyamides et leurs copolymères. Un mélange de polymères ou de copolymères peut aussi être utilisé, de même qu'un mélange de matières polymériques avec des charges inorganiques, organiques et/ou naturelles comme, par exemple, mais non limitativement : le carbone, les sels et autres dérivés inorganiques, les fibres naturelles, les fibres de verre et les fibres polymériques. II est également possible d'utiliser des structures multicouches constituées de couches empilées et solidaires comprenant au moins un des polymères ou copolymères décrits supra.

Les polyhalogénures de vinyle et les polyoléfines sont généralement préférés.

Un polymère souvent employé est le polyéthylène. D'excellents résultats ont été obtenus avec du polyéthylène haute densité (PEHD).

Selon l'invention, le réservoir à additif est associé à une tubulure de remplissage du réservoir à carburant. La tubulure de remplissage du réservoir à carburant est généralement une conduite en matière plastique, monocouche ou multicouche, qui relie le réservoir à carburant à un point situé à un niveau habituellement plus élevé que le réservoir et par laquelle il est possible de réapprovisionner le réservoir en carburant. Par le vocable "associé", on entend « fixé à » ou « relié à par une ou plusieurs canalisations ».

La fixation peut se faire par au moins un moyen de solidarisation mécanique permettant la liaison du réservoir à additif avec la tubulure de remplissage du réservoir à carburant. Des exemples de tels moyens de solidarisation sont, de manière non limitative : le soudage, le boulonnage, le serrage, le cottage, l'enclipsage et la fixation par bride mécanique. Le soudage et la fixation par bride ont donnés de bons résultats. Dans le cas où le réservoir à additif est fixé à la tubulure de remplissage, il est généralement situé hors du volume du réservoir principal à carburant, c'est-à-dire qu'il constitue un réservoir séparé du réservoir à carburant auquel il n'est relié que par une ou plusieurs canalisations.

La liaison par une ou plusieurs canalisations est telle qu'elle permet de remplir le réservoir à additif via la tête de la tubulure de remplissage du réservoir principal à carburant.

Selon une première forme de réalisation de l'invention, le réservoir à additif peut remplacer une capacité de dégazage montée sur le haut de la tubulure de remplissage du réservoir principal à carburant. Une telle capacité se rencontre fréquemment dans les systèmes à carburant et peut être montée sur le haut d'une tubulure de remplissage. Elle a généralement pour but de séparer, de retenir et de renvoyer vers le réservoir à carburant les entraînements de carburant liquide qui s'échappent avec les gaz lors du remplissage du réservoir à carburant. Dans cette forme de réalisation, la capacité de dégazage est déplacée vers un autre endroit du voisinage du réservoir à carburant. Elle peut aussi être supprimée et sa fonction assurée par l'addition sur le réservoir d'un clapet spécial qui assure la même fonction de piégeage des entraînements de carburant liquide dans le flux de gaz s'échappant du réservoir à carburant.

Selon une deuxième forme de réalisation du réservoir à additif conforme à l'invention, ce réservoir peut être disposé côte à côte d'une capacité de dégazage montée sur le haut de la tubulure de remplissage du réservoir principal à carburant. Généralement, dans cette forme de réalisation, les moyens de solidarisation de la capacité à la tubulure sont semblables à ceux du réservoir à additif et de la tubulure. Des moyens de solidarisation supplémentaires du réservoir à additif à la capacité de dégazage peuvent aussi être ajoutés dans le but de rigidifier l'ensemble tubulure-réservoir à additif-capacité de dégazage.

Selon une troisième forme de réalisation du réservoir à additif conforme à l'invention, ce réservoir peut être disposé dans n'importe quelle partie du véhicule (par exemple dans ou sur le réservoir principal à carburant), mais il est relié d'une part à la tête de la tubulure de remplissage par au moins une canalisation de forme et de taille adaptée à la géométrie de l'environnement et au débit souhaité, et d'autre part, au réservoir principal de carburant par une autre canalisation.

Dans les trois formes de réalisation du réservoir à additif décrites ci-dessus, on peut avantageusement rencontrer une canalisation de remplissage d'additif ainsi qu'une canalisation de dégazage de ce réservoir à additif qui aboutissent toutes les deux dans un dispositif équipant le haut de tubulure de remplissage du réservoir principal à carburant, à côté d'un orifice de guidage pour un pistolet distributeur de carburant. Un bouchon commun aux extrémités de ces deux canalisations peut aussi assurer la fermeture plus ou moins étanche de ces canalisations, en dehors des périodes de remplissage de ce réservoir à additif.

Dans cette forme avantageuse du réservoir à additif selon l'invention, la canalisation de dégazage du réservoir à additif peut être munie, dans sa partie haute, de moyens pour indiquer visuellement un état de trop-plein à un opérateur, en fin de processus d'appoint d'additif par la canalisation de remplissage. Ces moyens peuvent consister, par exemple, en un flotteur placé dans la canalisation de dégazage qui remonte vers l'orifice supérieur de cette canalisation, dès que le réservoir est rempli en additif et menace de déborder par cette canalisation.

Par ailleurs, si le réservoir à additif est visible de l'utilisateur (c.à.d. de la personne qui le remplit), ledit réservoir peut être transparent ou translucide et/ou comporter un système de barre de niveau.

Dans l'une ou l'autre des diverses formes de réalisation du réservoir à additif décrites ci-dessus, ce dernier peut avantageusement être associé à un dispositif de dosage dont une sortie communique avec le réservoir principal à carburant. Un tel dispositif peut consister en divers systèmes de dosage, bien connus par eux-mêmes. Des exemples de tels systèmes sont, de manière non limitative : une électrovanne, dont l'ouverture et la fermeture sont commandées par le calculateur de gestion du moteur du véhicule, insérée dans un conduit quittant le fond du réservoir et permettant de doser l'écoulement naturel par gravité d'une certaine quantité d'additif ou une pompe doseuse, actionnée par un moteur électrique commandé par le même calculateur, qui débite un flux d'additif en direction d'un injecteur situé sur une paroi du réservoir principal. De préférence, le système de dosage consiste en une pompe à seringue telle que décrite dans la demande FR 0320880.8 au nom de la demanderesse et dont le contenu est incorporé par référence dans la présente demande.

Le système de dosage peut être soit situé directement sur le réservoir à additif, de préférence dans sa partie inférieure, soit être fixé sur une platine porto-acccssoircs fixée sur le réservoir, soit encore sur tout autre élément du système à carburant destiné à alimenter le moteur en ledit carburant et ce au moyen d'un clipagc, d'une soudure, ou d'un collage du corps. Par exemple, cette fixation peut se faire sous la capacité de la tubulure de remplissage, sur la paroi de la tubulure en position haute (à proximité de la tête), sur la paroi du réservoir ou dans le module de puisage du carburant.

Enfin, le réservoir à additif selon l'invention est muni d'au moins deux canalisations : une pour le remplissage et une pour le dégazage, cette dernière étant de préférence munie d'un système de sécurité en pression et en ' dépression. Ce système a notamment pour but de permettre l'évacuation de l'air présent dans le réservoir durant le remplissage (sécurité en pression) et de remplacer le volume d'additif progressivement consommé durant le fonctionnement du véhicule par de l'air (sécurité en dépression). Avantageusement, ce système comporte un clapet qui ne s'ouvre qu'au-delà d'un seuil de pression donné (par exemple supérieur à 120 mbars) et ce pour éviter les fuites d'additif et les ingressions non souhaitées de liquide, poussières...

L'invention concerne aussi un procédé pour fabriquer une tubulure de remplissage à laquelle est associé un réservoir à additif pour système à carburant, en matière plastique, selon lequel, dans une première étape, on moule d'abord une enceinte fermée en matière plastique selon une technique choisie parmi l'extrusion-soufflage d'une paraison et l'injection-soudage de coquilles et, dans une deuxième étape, on assemble ou on relie ensuite l'enceinte avec une tubulure de remplissage du réservoir principal à carburant.

Dans ce procédé, les termes utilisés ont la même signification que ceux employés plus haut pour décrire le réservoir à additif.

Dans une forme de réalisation avantageuse du procédé selon l'invention, qui est préférée, la première étape est réalisée par extrusion-soufflage d'une paraison servant aussi à produire la tubulure de remplissage du réservoir principal à carburant en même temps que le réservoir à additif et la deuxième étape l'est en laissant subsister de la matière plastique de manière à réunir, directement dès la sortie du moule et sans nécessiter de moyen de fixation supplémentaire, le réservoir à additif avec la tubulure de remplissage du réservoir principal à carburant. De cette manière, on obtient une réduction substantielle de la complexité et des coûts de l'ensemble tubulure de remplissage-réservoir à additif. En outre, la robustesse et la rigidité de l'ensemble s'en trouvent améliorées, sans que le comportement du système à carburant au feu en soit affecté.

Alternativement, et dans le même ordre d'idées, le réservoir à additif peut être réalisé d'une seule pièce avec toute autre partie de système à carburant, par exemple avec la paroi du réservoir principal à carburant.

Une forme de réalisation alternative du procédé consiste, dans la première étape, à souffler une paraison en matière plastique dans un moule séparé afin de produire le réservoir à additif et, dans la deuxième étape, à assembler ou à relier le réservoir produit à la première étape avec la tubulure de remplissage du réservoir principal à carburant tel que décrit précédemment.

Enfin, on peut encore, alternativement, injecter d'abord, dans une première étape, deux pièces creuses en matière plastique dans un moule d'injection afin d'obtenir deux coquilles que l'on soude ensuite l'une sur l'autre afin d'obtenir un réservoir à additif et, dans une deuxième étape, assembler ou relier le réservoir produit à la première étape avec la tubulure de remplissage du réservoir principal à carburant tel que décrit précédemment.

Les figures qui suivent sont données dans le but d'illustrer l'invention, sans vouloir toutefois en restreindre sa portée.

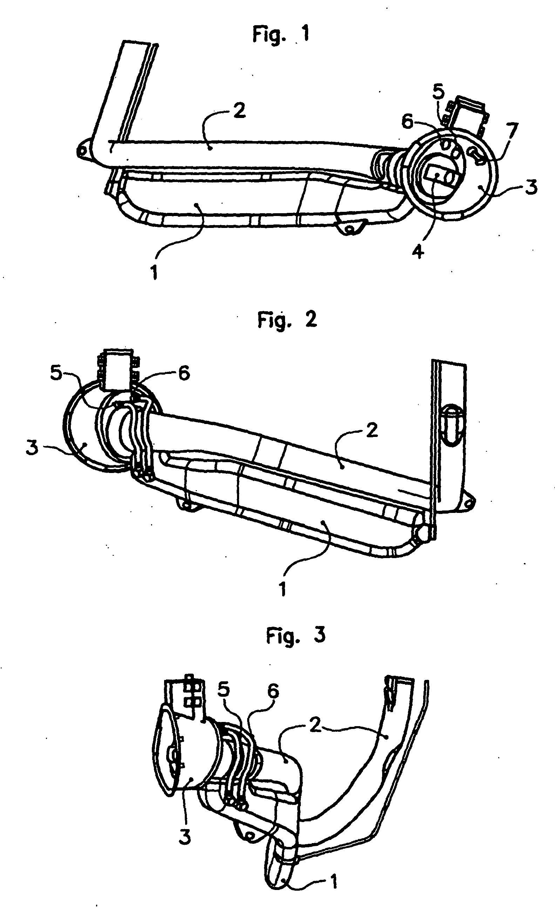

Aux figures 1 à 3, on a représenté une vue de face avant (figure 1), arrière (figure 2) et de profil (figure 3) d'un ensemble réservoir à additif (1) en PEHD et tubulure de remplissage (2) d'un système à carburant.Un dispositif (3) de haut de tubulure (2) laisse apparaître un bouchon de réservoir à carburant (4) obturant un orifice de guidage de pistolet distributeur (non représenté). On distingue aussi la canalisation (5) de remplissage et (6) de dégazage du réservoir à additif (1) qui affleurent dans le dispositif (3) de haut de tubulure. Un bouchon double (7) est visible sur la figure 1, à l'état déposé de manière à libérer l'ouverture des canalisations (5) et (6).

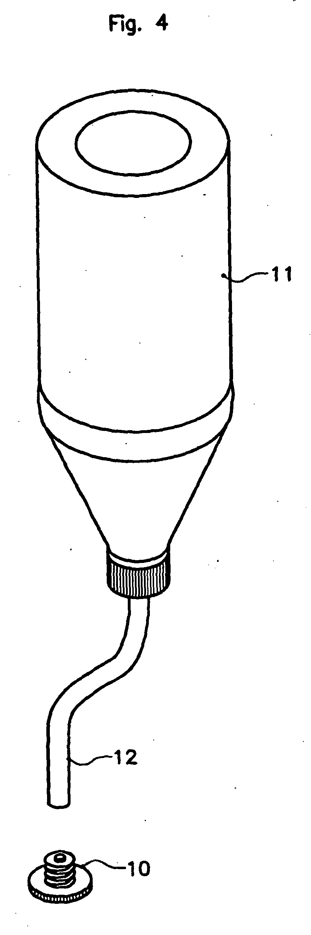

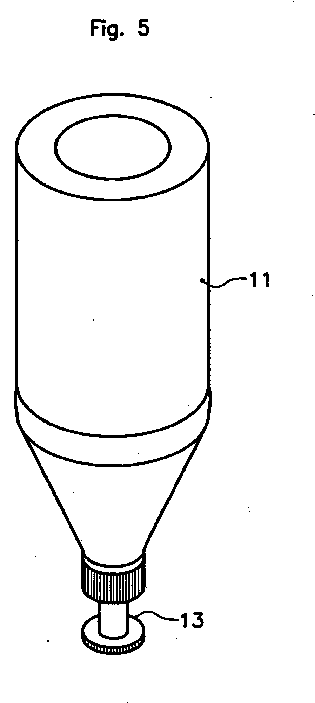

Aux figures 4 et 5 sont schématisés des récipients (11) de recharge d'additif permettant un remplissage aisé et propre du réservoir à additif conforme à l'invention. Les récipients (11) sont réalisés en matière plastique souple et contiennent un volume d'additif liquide correctement dosé et correspondant au volume exact du réservoir à additif.

A la figure 4, un raccord (10), prévu pour se visser sur le haut de la canalisation (5) de remplissage du réservoir à additif (1), permet de connecter un tuyau souple (12) relié à son autre extrémité au récipient de recharge (11).

A la figure 5, un raccord (13), se vissant aussi sur le haut de la canalisation (5) de remplissage du réservoir à additif (1), est directement fixé au sommet du récipient de recharge (11) d'additif. Par simple pression sur les parois du récipient souple de recharge (11), le mécanicien chargé de l'entretien du véhicule peut transférer aisément et proprement le contenu en additif du récipient de recharge dans le réservoir à additif.

## Revendications

1. Tubulure de remplissage (2) d'un réservoir principal à carburant à laquelle est associé un réservoir à additif (1) pour système à carburant comprenant une enceinte fermée en matière plastique, **caractérisée en ce qu'**une canalisation de remplissage d'additif (5) et une canalisation de dégazage du réservoir à additif (6) aboutissent dans un dispositif (3) équipant le haut de la tubulure de remplissage (2), à côté d'un orifice de guidage pour un pistolet distributeur de carburant.

2. Tubulure de remplissage (2) selon la revendication précédente, **caractérisée en ce que** le réservoir à additif (1) remplace une capacité de dégazage montée sur le haut de la tubulure de remplissage (2) du réservoir principal à carburant.

3. Tubulure de remplissage (2) selon la revendication 1, **caractérisée en ce que** le réservoir à additif (1) est disposé à côté d'une capacité de dégazage montée sur le haut de la tubulure de remplissage (2) du réservoir principal à carburant.

4. Tubulure de remplissage (2) selon l'une quelconque des revendications précédentes, **caractérisée en ce que** la canalisation de dégazage du réservoir à additif est munie, dans sa partie haute, de moyens pour indiquer visuellement un état de trop-plein à un opérateur, en fin d'opération d'appoint d'additif par la canalisation de remplissage (5).

5. Tubulure de remplissage (2) selon l'une quelconque des revendications précédentes, **caractérisée en ce que** le réservoir à additif (1) est transparent ou translucide et/ou comporte un système de barre de niveau,

6. Tubulure de remplissage (2) selon une quelconque des revendications précédentes, **caractérisée en ce que** le réservoir à additif (1) est muni d'un dispositif de dosage de l'additif dont une sortie peut communiquer avec le réservoir principal à carburant.

7. Tubulure de remplissage (2) selon une quelconque des revendications précédentes, **caractérisée en ce que** le réservoir à additif (1) est muni d'un système de sécurité en pression et en dépression

8. Procédé pour fabriquer une tubulure de remplissage (2) selon l'une quelconque des revendications précédentes en matière plastique, **caractérisé en ce que,** dans une première étape, on moule d'abord une enceinte fermée en matière plastique destinée à constituer le réservoir à additif (1)par injection-soufflage d'une paraison servant aussi à produire la tubulure de remplissage (2) du réservoir principal à carburant en même temps que le réservoir à additif (1) et, dans une deuxième étape, on assemble ou on relie ensuite l'enceinte avec la tubulure de remplissage (2) du réservoir principal à carburant cette deuxième étape étant réalisée en laissant subsister de la matière plastique de manière à réunir, directement dès la sortie du moule et sans nécessiter de moyen de fixation supplémentaire, le réservoir à additif (1) avec la tubulure de remplissage (2) du réservoir principal à carburant.

## Claims

1. Tube (2) for filling a main fuel tank with which there is associated an additive reservoir (1) for a fuel system, comprising a closed plastic enclosure, **characterized in that** an additive filling line (5) and a venting line (6) of the additive reservoir terminate in a device (3) with which the top of the filling tube (2) is equipped, alongside a guiding orifice for a fuel delivery nozzle.

2. Filling tube (2) according to the preceding claim, **characterized in that** the additive reservoir (1) replaces a venting chamber mounted on the top of the main fuel tank filling tube (2).

3. Filling tube (2) according to Claim 1, **characterized in that** the additive reservoir (1) is placed alongside a venting chamber mounted on the top of the main fuel tank filling tube (2).

4. Filling tube (2) according to any one of the preceding claims, **characterized in that** the venting line of the additive reservoir is provided, in its top part, with means for visually indicating to an operator that there is an overfill state at the end of an operation to top up with additive via the filling line (5).

5. Filling tube (2) according to any one of the preceding claims, **characterized in that** the additive reservoir (1) is transparent or translucent and/or includes a level bar system.

6. Filling tube (2) according to any one of the preceding claims, **characterized in that** the additive reservoir (1) is provided with an additive metering device, an outlet of which can communicate with the main fuel tank.

7. Filling tube (2) according to any one of the preceding claims, **characterized in that** the additive reservoir (1) is provided with a pressure/underpressure safety system.

8. Process for manufacturing a filling tube (2) according to any one of the preceding claims, made of plastic, **characterized in that,** in a first step, a closed plastic enclosure, intended to constitute the additive reservoir (1), is firstly moulded by injection-blow moulding of a parison that is also used to produce the main fuel tank filling tube (2) at the same time as the additive reservoir (1), and, in a second step, the enclosure is then assembled or connected onto the main fuel tank filling tube (2),this second step being carried out by letting the plastic join up, directly on leaving the mould and without requiring an additional means for fastening the additive reservoir (1) to the main fuel tank filling tube (2).

## Patentansprüche

1. Einfüllstutzen (2) eines Kraftstoff-Hauptvorratsbehälters, dem ein Additiv-Vorratsbehälter (1) für das Kraftstoffsystem zugeordnet ist, der einen geschlossenen Kunststoffbehälter aufweist, **dadurch gekennzeichnet, dass** ein Additiv-Einfüllkanal (5) und ein Entgasungskanal (6) des Additiv-Vorratsbehälters in eine Vorrichtung (3) münden, mit der die Oberseite des Einfüllstutzens (2) auf Seiten einer Führungsöffnung für eine Kraftstoffzapfpistole ausgerüstet ist.

2. Einfüllstutzen (2) nach dem vorhergehenden Anspruch, **dadurch gekennzeichnet, dass** der Additiv-Vorratsbehälter (1) ein Entgasungsvolumen verdrängt, das an der Oberseite des Einfüllstützens (2) des Kraftstoff-Hauptvorratsbehälters angebracht ist.

3. Einfüllstutzen (2) nach Anspruch 1, **dadurch gekennzeichnet, dass** der Additiv-Vorratsbehälter (1) auf Seiten eines Entgasungsvolumens angeordnet ist, das an der Oberseite des Einfüllstutzens (2) des Kraftstoff-Hauptvorratsbehälters angebracht ist.

4. Einfüllstutzen (2) nach einem der vorhergehenden Ansprüche, **dadurch gekennzeichnet, dass** der Entgasungskanal des Additiv-Vorratsbehälters in seinem oberen Teil mit Mitteln versehen ist, die einer Bedienungsperson visuell einen überfüllten Zustand am Ende des Additivergänzungsvorgangs durch den Einfüllkanal (5) anzeigen.

5. Einfüllstutzen (2) nach einem der vorhergehenden Ansprüche, **dadurch gekennzeichnet, dass** der Additiv-Vorratsbehälter (1) lichtdurchlässig oder durchscheinend ist und/oder ein Pegelstabsystem enthält.

6. Einfüllstutzen (2) nach einem der vorhergehenden Ansprüche, **dadurch gekennzeichnet, dass** der Additiv-Vorratsbehälter (1) mit einer Vorrichtung zum Dosieren des Additivs versehen ist, deren Ausgang mit dem Kraftstoff-Hauptvorratsbehälter kommunizieren kann.

7. Einfüllstutzen (2) nach einem der vorhergehenden Ansprüche, **dadurch gekennzeichnet, dass** der Additiv-Vorratsbehälter (1) mit einem Überdruck- und Unterdruck-Sicherheitssystem versehen ist.

8. Verfahren zum Herstellen eines Einfüllstutzens (2) nach einem der vorhergehenden Ansprüche aus Kunststoff, **dadurch gekennzeichnet, dass** in einem ersten Schritt zunächst ein geschlossener Kunststoffbehälter, der dazu bestimmt ist, den Additiv-Vorratsbehälter (1) zu bilden, durch Spritzblasen eines Vorformlings, der auch dazu dient, den Einfüllstutzen (2) des Kraftstoff-Hauptvorratsbehälters gleichzeitig mit dem Additiv-Vorratsbehälter (1) herzustellen, gegossen wird und anschließend in einem zweiten Schritt der Behälter mit dem Einfüllstutzen (2) des Kraftstoff-Hauptvorratsbehälters zusammengefügt oder verbunden wird, wobei dieser zweite Schritt **dadurch** ausgeführt wird, dass Kunststoff übrig gelassen wird, derart, dass direkt nach dem Verlassen der Gießform und ohne Notwendigkeit zusätzlicher Befestigungsmittel der Additiv-Vorratsbehälter (1) mit dem Einfüllstutzen (2) des Kraftstoff-Hauptvorratsbehälters vereinigt wird.
